# EUROPEAN PATENT SPECIFICATION

(11) **EP 0 806 042 B1**
(45) Date of publication and mention of the grant of the patent: **14.04.1999**
(21) Application number: 96904449.4
(22) Date of filing: 11.01.1996
(51) Int. Cl.: G11B 27/30, G11B 20/12, G11B 5/012

(54) **DUAL IDENTIFICATION FOR DATA FIELDS OF A DISK DRIVE**
DOPPELTE IDENTIFIZIERUNG FÜR DATENFELDER EINES PLATTENANTRIEBGERÄTS
DOUBLE IDENTIFICATION DES SECTEURS DE DONNEES D'UNE UNITE DE DISQUES

(30) Priority: 27.01.1995 US 379378
(43) Date of publication of application: 12.11.1997
(73) Proprietor: Seagate Technology, Inc., Scotts Valley, CA 95066 (US)
(72) Inventor: YIP, Jolland, S., Cupertino, CA 95114 (US); CHANG, Dar-Der, Fremont, CA 94555 (US); SONU, Gene, Ho, San Jose, CA 95120 (US); HO, Jeng, Saratoga, CA 95070 (US)
(74) Representative: Kenyon, Sarah Elizabeth
(86) International application number: US9600379
(87) International publication number: WO9623305

(56) References cited:
- EP-A- 0 611 208
- GB-A- 2 279 491
- US-A- 4 979 056
- PATENT ABSTRACTS OF JAPAN vol. 18, no. 618 (P-1831), 24 November 1994 & JP,A,06 231541 (HITACHI LTD.), 19 August 1994,
- RESEARCH DISCLOSURE, no. 321, January 1991, HAVANT GB, page 40 XP000163465 DOC. NR. 32164: "Providing Additional ID Read Capability to Allow a Single ID with Magnetoresistive (MR) Head"

## Description

### Field of the Invention

The present invention is directed to disk drives. More particularly, the present invention provides dual identification fields for each data sector recorded on a data track of a disk so that the data can be written and read using a dual gap head such as a magnetoresistive head.

### Background of the Invention

Disk drives are commonly used in workstations, personal computers, laptops and other computer systems to store large amounts of data that are readily available to a user. In general, a disk drive comprises a magnetic disk that is rotated by a spindle motor. The surface of the disk is divided into a series of data tracks that extend circumferentially around the disk. Each data track can store data in the form of magnetic transitions on the disk surface.

An interactive element, such as a magnetic transducer, is used to sense the magnetic transitions to read data, or to conduct an electric current that causes a magnetic transition on the disk surface, to write data. Typically, the magnetic transducer is mounted in a head. The head, in turn, is mounted by a rotary actuator arm and is selectively positioned by the actuator arm over a preselected data track of the disk so that the transducer can either read data from or write data to the preselected data track of the disk, as the disk rotates below the transducer.

A gap is provided in the head to position the active elements of the transducer at a position suitable for interaction with the magnetic transitions. In certain modern transducer structures, dual gaps are provided in the head. one for positioning a read transducer and the other for positioning a write transducer. In this manner. separate technologies can be used for each of read and write transduction operations to enhance the overall effectiveness of a disk drive product. Moreover. the use of separate gaps accommodates design constraints that would preclude mounting different transduction technologies in the same physical gap.

For example, in a magnetoresistive head (MR head), a magnetoresistive element (MR element) is used as a read transducer. The magnetoresistive element comprises a material that exhibits a change in electrical resistance as a function of a change in magnetic flux of a magnetic field applied to the element. In a disk drive environment, the MR element is positioned within the read transducer gap, above a disk surface. In this position, the electrical resistance of the element changes in time as magnetic transitions recorded on the disk pass beneath the read gap, due to rotation of the disk. The changes in the resistance of the MR element caused by magnetic transitions on a disk occur far more quickly than the response of conventional transducers to magnetic transitions. Thus, an MR transducer is able to sense magnetic transitions during a read operation at higher rotational speeds and data densities.

However, an MR element is not able to conduct a current in a manner that efficiently generates a magnetic field, which is necessary to write data on a disk surface. Accordingly, an inductive circuit is used as the write transducer and is positioned in the separate write gap.

Due to the existence of two physical gaps for separate read and write transduction operations, there is necessarily a skew as between the two gaps and relative to the centerline of any particular data track on a disk surface, when a rotary actuator arm is used. This is because the rotary actuator moves the head along an arcuate path. from the inner diameter, to the outer diameter of the disk. The arcuate path causes the head to be at a skew angle relative to each data track, with the skew angle varying as a function of the position of the actuator. Moreover, the skew angle at any given data track causes a slightly different orientation relative to the centerline of the disk track for each of the read and write gaps.

Whenever data is either written to or read from a data track, the appropriate transducer gap must be centered over the centerline of the data track where the data is to be written or from where the data is to be read. to assure accurate transduction of the data. Thus, in a read operation, the gap associated with the MR element must be centered over the appropriate data track centerline and the gap associated with the inductive write circuit will be offset from that track centreline due to the skew angle effect. The opposite is true in a write operation.

In modern disk drive architectures, each data track is divided into a number of data sectors for storing a fixed sized data block. To facilitate access to any particular data block stored on a disk surface, each data sector includes an identification field (ID) to provide a unique "address" for the respective data sector. The address contains position information and permits a computer system to locate and verify the identity of a particular data field to be written or read at any one time.

In either a read or write operation, the ID of the data sector is read to verify that the actuator arm has positioned the transducer over the proper data sector. As noted above, when the disk drive includes a dual gap transducer, there is a skew between the read and write gaps relative to the centreline of the data track containing the data sector of interest to the computer system. Thus, in a write operation, the write gap is positioned over the centreline of the data track where a particular data sector to be written is located. However, the read gap is now offset form the track centreline due to the skew angle effect, and is not in a proper position to accurately read the ID field to verify that the commuter system has access to the correct data sector for writing.

A prior solution to the problem of an inability to accurately read an ID field due to gap skew is to record two ID fields for each data sector. Such an arrangement is disclosed in GB-A-2279491 which shows a disk medium as recited in the preamble of Claim 1. One of the ID fields is aligned with the centreline of the respective data track, while the second ID field is offset from the track centreline by an amount equal to the skew experienced by the gap not aligned with the centreline of the respective data track where the data sector is located. In this manner, when the write gap is positioned over a track centreline, the read gap will be centred over the offset, second ID field. Thus, in a write operation, the read transducer can be used to accurately read the second, offset ID field to verify that the proper data sector has been accessed. The write gap will then be properly positioned over the track centreline to write data to the data sector.

A disk drive comprising the features recited in the preamble of Claim 4 is known from EP-A-0 611 208.

While the prior solution overcomes the skew problem, additional overhead is required to maintain the two ID fields. Overhead refers to portions of a disk surface that must be used to store information necessary for the control of the disk drive. Space on a disk surface used to store control information is not available to store data, and thus reduces the storage capacity of the disk drive. The ID fields are examples of overhead. The use of two complete ID fields per data sector doubles the overhead imposed by the address information.

In any disk drive design, consideration is given to cost/benefit of any overhead imposed on a disk surface. If the advantage of the control information outweighs the overhead cost, the addition of the overhead will be considered acceptable. The dual ID filed arrangement offers a practical solution to dual gap heads. and the advantages of using MR heads generally outweighs the additional overhead imposed by dual ID fields in some disk drive applications, even when the ID field overhead is doubled.

### Summary of the Invention

The present invention, as defined in claims 1 and 4, provides a dual ID field arrangement that minimizes the additional overhead imposed on the disk drive system, while maintaining the advantages of the dual ID proposal. Generally, the present invention shares certain overhead between the ID field aligned with a track centerline and the data field of the respective data sector.

Typically, each field recorded on a disk surface includes overhead necessary to synchronize the read and write electronics to the magnetic transitions on the disk surface. For example each ID field generally requires a VFO signal and a sync mark. The VFO signal is processed by the read electronic circuit to synchronize or "lock" its frequency of operation to the frequency of occurrence of magnetic transitions as the disk rotates below the read transducer. In this manner, the read electronic circuit can properly process the transitions to detect the ID information. The sync mark indicates that the transitions following the mark represent the actual ID information for the respective data sector. Both the VFO signal and sync mark take up space on the disk surface, and thus impose an overhead on the disk.

According to the present invention, the ID field aligned with the track centerline is merged into the data field of the data sector and utilizes the VFO signal and sync mark already present in the data field for use in reading and writing data. The ID information is written after the data sync mark and prior to the actual data. Accordingly, the amount of overhead added to a disk surface in a dual ID arrangement is minimized.

The present invention also reduces the number of passes required to write ID fields during an operation to format the disk. A formatting operation involves the writing of overhead information on a disk surface prior to using the disk to store data. A pass refers to a complete rotation of a disk to write the overhead required for a data track of the disk. In the dual ID field arrangement of the prior proposal, two passes are required per data track, a first pass to write the offset ID field, and a second pass to write the ID field aligned with the track centerline.

According to the present invention, only one pass to write the offset ID field is necessary during a formatting operation. The second aligned ID field is written during a normal write operation, e.g., at the time when data is first written to the respective data sector. Thus, in addition to minimizing overhead, the present invention maintains a formatting operation that is commensurate, in terms of the number of passes required to format the disk, with a formatting operation performed in a single ID field arrangement.

### Brief Description of the Drawings

Figure 1 is perspective view of a disk drive.

Figures 2a-c are a series of top views of a disk and actuator of the disk drive of fig. 1 showing data tracks, and the actuator positioned at the inner diameter, middle diameter and outer diameter, respectively, of the disk.

Figure 3 is an illustration of a data track including a dual ID field arrangement according to the prior art.

Figure 4 is an illustration of a data track including a dual ID field arrangement according to the present invention.

Figure 5 is an illustration of a complete ID field including VFO and sync mark overhead.

Figure 6 is an illustration of the merged ID and data field of fig. 4, according to the present invention.

Figures 7a-c illustrate, in sequence, disk format and data write operations according to the present invention.

Figure 8 illustrates a dual ID arrangement according to another embodiment of the present invention.

### Detailed Description

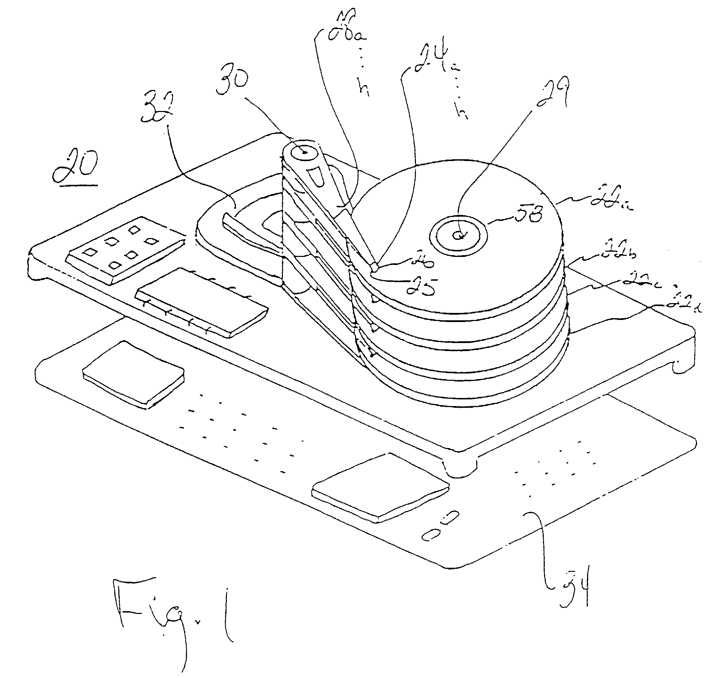

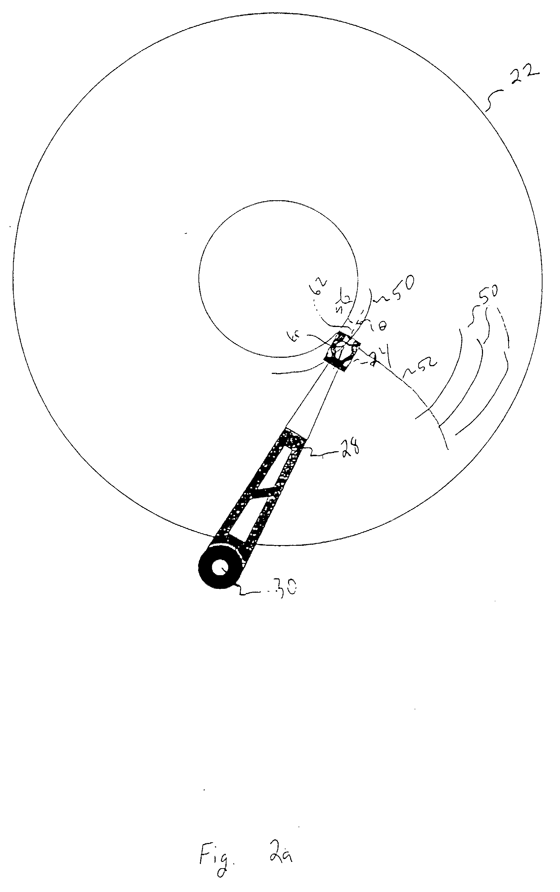

Referring now to the drawings, and initially to fig. 1, there is illustrated a disk drive designated generally by the reference numeral 20. The disk drive includes a plurality of storage disks 22a-d and a plurality of read/write heads 24a-h. Each of the storage disks 22a-d is provided with a plurality of data tracks to store user data. As illustrated in fig. 1. one head is provided for each surface of each of the disks 22a-d such that data can be read from or written to the data tracks of all of the storage disks. It should be understood that the disk drive 20 is merely representative of a disk drive system utilizing the present invention and that the present invention can be implemented in a disk drive system including more or less storage disks.

The storage disks 22a-d are mounted for rotation by a spindle motor arrangement 29, as is known in the art. Moreover, the read/write heads 24a-h are supported by respective actuator arms 28a-h for controlled positioning over preselected radii of the storage disks 22a-d to enable the reading and writing of data from and to the data tracks, To that end. the actuator arms 28a-h are rotatably mounted on a pin 30 by a voice coil motor 32 operable to controllably rotate the actuator arms 28a-h radially across the disk surfaces.

Each of the read/write heads comprises a magnetic transducer 25 mounted to a slider 26 having an air bearing surface. As typically utilized in disk drive systems, the sliders 26 cause the magnetic transducers 25 of the read/write heads 24a-h to "fly" above the surfaces of the respective storage disks 22a-d for non-contact operation of the disk drive system. When not in use, the voice coil motor 32 rotates the actuator arms 28a-h to position the read/write heads 24a-h over a respective landing zone 58, where the read/write heads 24a-h come to rest on the storage disk surfaces.

As known. a printed circuit board (PCB) 34 is provided to mount control electronics for controlled operation of the spindle motor 29 and the voice coil motor 32. The PCB 34 also incudes read/write channel circuitry coupled to the read/write heads 24a-h, to control the transfer of data to and from the data tracks of the storage disks 22a-d.

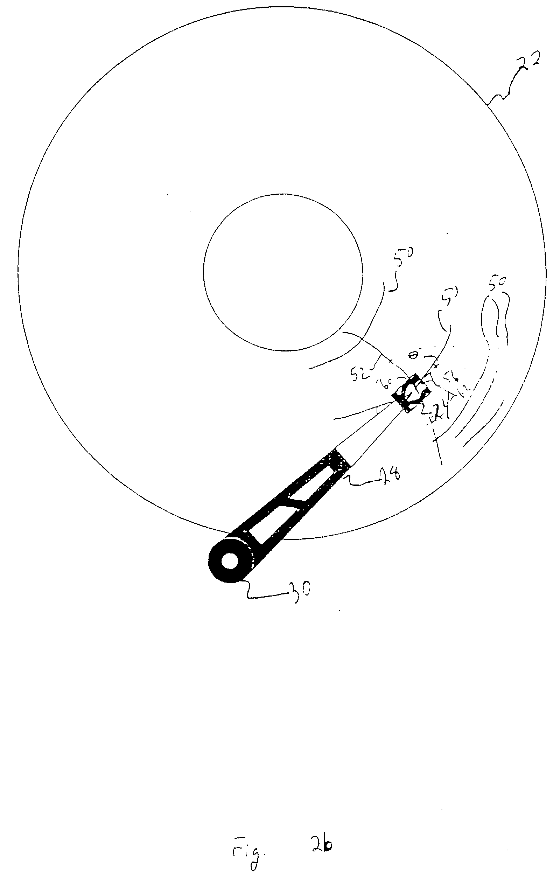

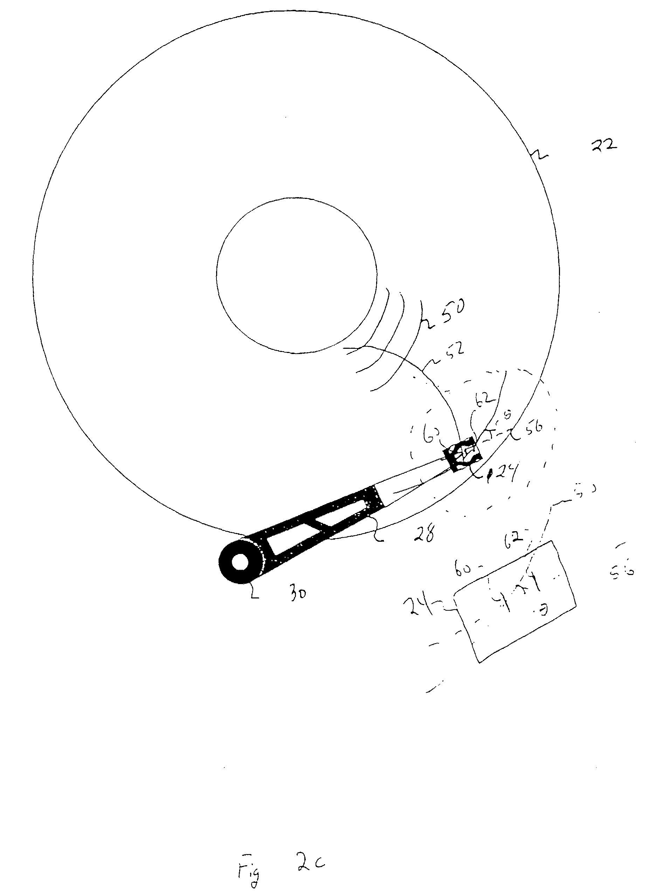

Referring now to figs. 2a-c, there is illustrated, in each drawing, a top plan view of one of the disks 22a-d of fig. 1. As shown by representative data track segments 50. the disk surface is divided into a plurality of individual data tracks. Each of the data tracks 50 extends circumferentially around the disk. The data tracks 50 are radially spaced from one another from an inner radius to an outer radius of the disk 22.

As described above. the actuator arm 28 mounts the head 24 for selective positioning of the head 24 over any one of the data tracks 50. Each head 24 includes a read gap and a write gap, shown schematically at reference numerals 60 and 62. respectively. As shown in each of figs. 2a-c, the path 52 followed by the head 24 due to rotation of the actuator arm 28 is arcuate, causing the axis 56 of the head 24 to form a skew angle θ with each the data track 50. The skew angle θ varies from track to track across the circumference of the disk 22. as shown in figs. 2a-c. The skew angle θ is greatest when the head 24 is positioned by the actuator 28 over the outer radius of the disk 22 (fig. 2c), and is smallest when the head 24 is at the middle radius of the disk 22 (fig. 2b).

Moreover, the skew angle θ causes one of the gaps 62 in the head 24 to be offset from a data track centerline when the other gap 60 is centered over the centerline. This is shown most clearly in the exploded portion of fig. 2c.

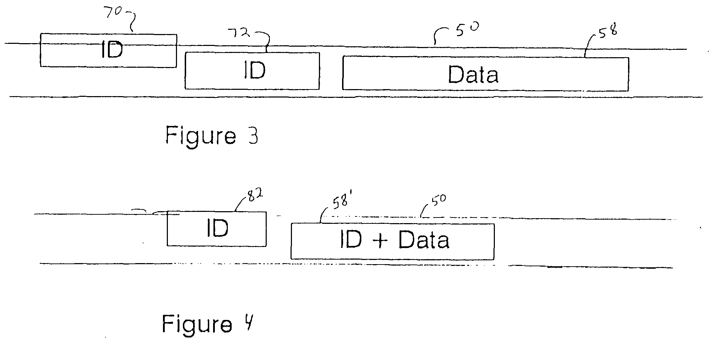

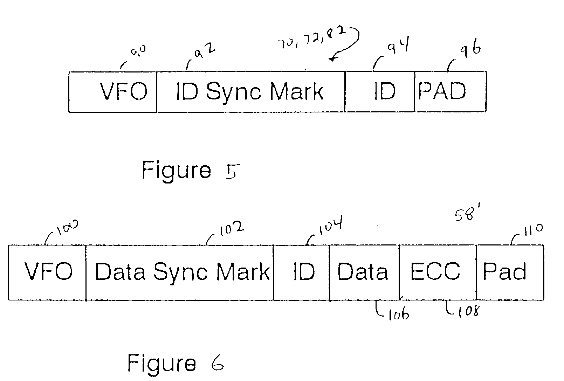

Each data track 50 is divided into a series of data sectors. An illustration of a representative data sector 58 is depicted in each of figs. 3 and 4. The data sector 58 is centered in a data track 50 and contains magnetic transitions (not shown) that can be sensed by the read transducer in the read gap 60 when the read gap 60 is centered over the centerline of the data track 50. Similarly, magnetic transitions can be wntten into the data sector 58 by the transducer in the write gap 62 when the write gap 62 is centered over the centerline of the data track 50.

Figure 3 illustrates a dual ID arrangement for a data sector, according to the prior solution discussed above. The data sector 58 is preceded by two ID fields, a write ID field 70 and a read ID field 72. The write ID field 70 is offset from the centerline of the data track 50 by an amount sufficient to compensate for the skew angle effect at the particular data track, such that the read gap 60 is centered over the ID field 70 when the write gap 62 is centered over the data sector 58. Accordingly, during a write operation, the read transducer can accurately read the ID information stored in the ID field 70 to verify that the head 24 is positioned over the proper data sector 58.

During a read operation, the read gap 60 is centered over the centerline of the data track and reads the ID information from the read ID field 72, as well as the data from the data sector 58.

Referring for a moment to fig. 5, there is illustrated a complete ID field. Each of the ID fields 70. 72 of the prior proposal include a VFO signal 90 that is recorded on the disk surface. The VFO signal is read by the read transducer for use by the read/write channel circuitry on the PCB 34 to synchronize or "lock" its frequency of operation to the frequency of occurrence of magnetic transitions (i.e. the magnetic transitions representing the actual ID information) as the disk rotates below the read transducer. The VFO signal 90 is followed by a sync mark field 92 that includes information to indicate to the read/write channel when the actual ID information begins. The actual ID information 94 is recorded after the sync mark field 92 and is followed by a pad field 96 to separate the ID field 70, 72 from other transitions recorded on the disk surface.

As can be seen from fig. 5. each ID field 70, 72 of the prior proposal includes VFO and sync mark information, thus adding to the total overhead required to implement the prior dual ID field arrangement.

Pursuant to the present invention, the total overhead required to implement a dual ID field arrangement is minimized by sharing VFO and sync mark information between the data field of the data sector and the ID field aligned with the centerline of the data track. As shown in fig. 4, an offset write ID field 82 is arranged to compensate for the skew effect so that ID information can be read by the read transducer during a write operation. The write ID field 82 includes a VFO signal and sync mark, as shown in fig. 5. However, according to the present invention, read ID information aligned with the data track centerline, to be read by the read transducer during a read operation, is merged into a data sector 58'. Accordingly, the read ID field of the sector 58' shares VFO and sync mark overhead with the data stored within the sector 58'.

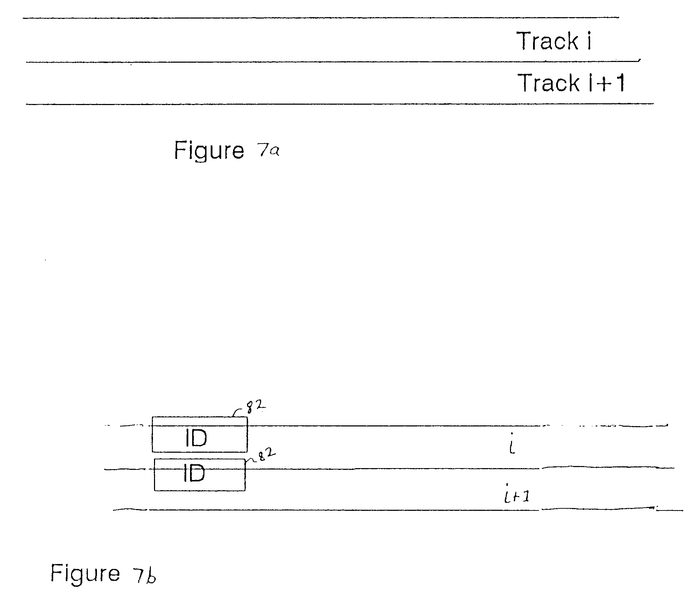

Referring now to fig. 6. there is illustrated the merged ID and data arrangement of the data sector 58' of fig. 4. A VFO signal 100 read by the read transducer. is used by the read/write channel circuitry to lock its frequency of operation to the frequency of occurrence of magnetic transitions within the entire sector 58', including the ID and data information represented by the transitions within the sector 58'. Similarly. a data sync mark field 102 includes information to indicate to the read/write channel the beginning of the actual information to be detected during a read operation. In the case of the sector 58', the information to be detected includes both the ID information and the data.

The data sync mark field 102 is followed by the actual ID information. at field 104. The ID information is followed, in turn, by a data field 106 containing the data. As shown in fig. 6, the data field 106 is followed by error correction code information (ECC), in field 108, as generally known in the art. A pad field 110 is provided following the ECC filed 108. The synchronization and sync mark information contained in fields 100 and 102 is shared by the ID and data fields 104, 106 and eliminates the need for separate and complete overhead fields for the aligned read ID field to thereby minimize the total overhead required for the dual ID field information.

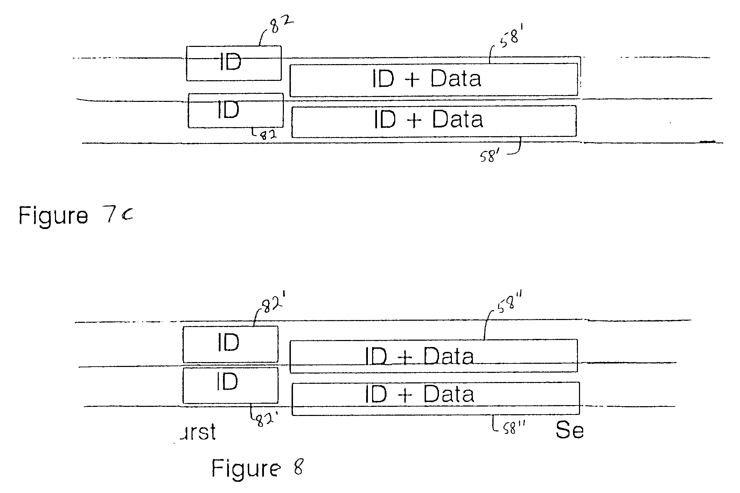

Another advantage of the dual ID field arrangement according to the present invention is that only a single pass is required to format the disk. Figure 7a shows two unformatted data tracks labeled Track i and Track i+1. The two unformatted tracks are devoid of overhead information.

Figure 7b shows the two tracks after a single pass over each track i and i+1 by a write transducer. During each pass, the write transducer is offset from track centerline by an amount sufficient to compensate for the skew that occurs in respect of the read gap at those times when the write gap is centered over the track centerline. While positioned in this offset position, the write transducer is used to write the offset ID fields 82 in the respective track. The write transducer writes an ID field 82 for each data sector allocated to the particular track, with the ID fields 82 being spaced radially from one another by an appropriate amount of space sufficient to accommodate the writing of a data sector.

Figure 7c illustrates the tracks i and i+1 after a write operation to each track. For each track. the write gap 62 is centered on the track centerline, and, consequently, as discussed above, the read gap 60 is offset from the track centerline due to the skew effect. However, the read gap 60 will be centered on the ID filed 82, as written during the disk format operation. The read transducer is operated to read the ID information.

If the ID infonnation verifies that the head is located at the correct track, the write transducer is operated to write the data desired to the stored in the data sector 58' of the respective track i or i+1. At the time of writing the data into the data sector 58', the write transducer is controlled to write a copy of the ID information written in the ID field 82, according to the arrangement of ID and data fields 104, 106 shown in fig. 6. In this manner, the ID information can be read by the read transducer for verification, when the read gap 60 is centered over the track centerline in a subsequent read operation of the data sector 58'.

Figure 8 shows an alternative embodiment of the present invention. In this embodiment, a write ID field 82' is written at format time and is aligned with the track centerline. During a write operation, after disk formatting, the read gap 60 is aligned with the track centerline to read the ID information. As should be understood, the write gap 62 is now offset from the track centerline due to the skew effect. Thus, when the read ID information verifies that the head is positioned over the correct data sector, a merged ID and data field 58" is written by the write transducer at a radial location that is offset from the track centerline. During a read operation, the read gap is centered over the field 58" rather than the track centerline.

## Claims

1. A disk medium for use in a disk drive having at least one storage disk (22) mounted for rotation, a head (24) having separate read and write gaps, and a rotary actuator (28) for mounting the head for reading and writing data from and to the storage disk, said disk medium for the storage disk comprising:
a magnetizable surface;
a plurality of circumferentially extending data tracks (50) defined on the magnetizable surface;
each data track having a centreline and including at least one data sector (58); the at least one data sector comprising a data field for storing data and control information for use in reading the data sector;
each data track further including a write ID field (82, 82') containing data sector identification information for reading during a write operation of the at least one data sector and a read ID field (58', 58") containing data sector identification information for reading during a read operation of the at least one data sector;
characterised in that
either the write ID field (82, 82') is arranged at a position aligned to the centreline of a respective data track and said data sector is radially offset from the centreline, or
the write ID field (82, 82') is arranged at a position radially offset from the centreline of a respective data track and said data sector is aligned to the centreline; and in that
the write ID field (82, 82') has control information for use in reading the write ID field; and
the read ID field (58', 58") is arranged within the data field such that the control information of the at least one data sector is used for reading the read ID field.

2. A disc drive medium as claimed in claim 1, in which the amount of radial offset is a function of a skew angle caused by the positioning of the head by the rotary actuator.

3. A disc drive medium as claimed in claim 1 or 2, in which each of the control information in the data sector and in the write ID field includes a VFO signal and a sync mark.

4. A disk drive, comprising:
a storage disk mounted for rotation;
a head having separate read and write transducers arranged in separate respective read and write gaps; and
a rotary actuator for mounting the head for reading and writing data from and to the storage disk;
the rotary actuator causing a skew angle between the read and write gaps and the data tracks;
the storage disk comprising a magnetizable surface having a plurality of circumferentially extending data tracks defined on the magnetizable surface;
each data track including at least one data sector;
the at least one data sector comprising a data field for storing data and control information for use in reading the data sector; characterized in that
each data track further includes a write ID field containing data sector identification information for reading by the read transducer of the head during a write operation of the at least one data sector and a read ID field containing data sector identification information for reading the read transducer of the head during a read operation of the at least one data sector;
the write ID field being arranged in the respective data track at a position radially offset from the at least one data sector, the radial offset being a function of the skew angle such that the read gap is centred over the write ID field when the write gap is centred over the at least one data sector;
the write ID field having control information for use in reading the write ID field;
the read ID field being arranged within the data sector such that the control information of the at least one data sector is used for reading the read ID field.

5. A disc drive as claimed in claim 4, in which each of the control information in the data sector and in the write ID field includes a VFO signal and a sync mark.

## Patentansprüche

1. Plattenmedium zur Verwendung in einem Plattenlaufwerk mit zumindestens einer drehbar befestigten Speicherplatte (22), mit einem Kopf (24), der getrennte Lese- und Schreibspalte aufweist, und mit einem Drehstellglied (28) zur Befestigung des Kopfes zum Lesen und Schreiben von Daten von und auf die Speicherplatte, wobei das Plattenmedium für die Speicherplatte folgendes umfaßt:
eine magnetisierbare Oberfläche,
eine Vielzahl von sich in Umfangsrichtung erstreckenden Datenspuren (50), die auf der magnetisierbaren Oberfläche definiert sind,
wobei jede Datenspur eine Mittellinie aufweist und zumindest einen Datensektor (58) einschließt,
wobei der zumindest eine Datensektor ein Datenfeld zum Speichern von Daten und Steuerinformationen zur Verwendung beim Lesen des Datensektors aufweist,
wobei jede Datenspur weiterhin ein Schreib-Identifikationsfeld (82,82'), das Datensektor-Identifikationsinformation zum Lesen während eines Schreibbetriebs des zumindest einen Datensektors und ein Lese-Identifikationsfeld (58', 58") einschließt, das Datensektor-Identifikationsinformationen zum Lesen während eines Lesevorganges des zumindest einen Datensektors enthält,
dadurch gekennzeichnet, daß
entweder das Schreib-Identifikationsfeld (82,82') an einer mit der Mittellinie einer jeweiligen Datenspur ausgerichteten Position angeordnet ist und der Datensektor in Radialrichtung gegenüber der Mittellinie versetzt ist, oder
das Schreib-Identifikationsfeld (82,82') an einer gegenüber der Mittellinie einer jeweiligen Datenspur radial versetzten Position angeordnet ist und der Datensektor mit der Mittellinie ausgerichtet ist und daß
das Schreib-Identifikationsfeld (82,82') Steuerinformationen zur Verwendung beim Lesen des Schreib-Identifikationsfeldes aufweist, und
das Lese-Identifikationsfeld (58',58") innerhalb des Datenfeldes derart angeordnet ist, daß die Steuerinformationen des zumindest einen Datensektors zum Lesen des Lese-Identifikationsfeldes verwendet werden.

2. Plattenlaufwerkmedium nach Anspruch 1, bei dem das Ausmaß der radialen Versetzung eine Funktion eines Schrägstellungswinkels ist, der durch die Positionierung des Kopfes durch das Drehstellglied hervorgerufen wird.

3. Plattenlaufwerkmedium nach Anspruch 1 oder 2, bei dem jede der Steuerinformationen in dem Datensektor und in dem Schreib-Identifikationsfeld ein VFO-Signal und eine Synchronisationsmarke einschließt.

4. Plattenlaufwerk mit:
einer drehbar befestigten Speicherplatte,
einem Kopf, der getrennte Lese- und Schreib-Wandler aufweist, die in getrennten jeweiligen Lese- und Schreib-Spalten angeordnet sind, und
ein Drehstellglied zum Befestigen des Kopfes zum Lesen und Schreiben von Daten von und auf die Speicherplatte,
wobei das Drehstellglied einen Schrägstellungswinkel zwischen den Lese- und Schreibspalten und den Datenspuren hervorruft,
wobei die Speicherplatte eine magnetisierbare Oberfläche mit einer Vielzahl von sich in Umfangsrichtung erstreckenden Datenspuren aufweist, die auf der magnetisierbaren Oberfläche definiert sind,
wobei jede Datenspur zumindest einen Datensektor einschließt,
wobei der zumindest eine Datensektor ein Datenfeld zum Speichern von Daten und Steuerinformationen zur Verwendung beim Lesen des Datensektors aufweist,
dadurch gekennzeichnet, daß
jede Datenspur weiterhin ein Schreib-Identifikationsfeld, das Datensektor-Identifikationsinformationen zum Lesen durch den Lesewandler des Kopfes während eines Schreibvorganges des zumindest einen Datensektors und ein Lese-Identifikationsfeld einschließt, das Datensektor-Identifikationsinformationen zum Lesen durch den Lesewandler des Kopfes während eines Lesevorganges des zumindest einen Datensektors enthält,
wobei das Schreib-Identifikationsfeld in der jeweiligen Datenspur an einer radial gegenüber dem zumindest einen Datensektor versetzten Position angeordnet ist, wobei die radiale Versetzung eines Funktion des Schrägstellungswirkels derart ist, daß der Lesespalt über dem Schreib-Identifikatíonsfeld zentriert ist, wenn der Schreib-Spalt über dem zumindest einen Datensektor zentriert ist,
wobei das Schreib-Identifikationsfeld Steuerinformationen zur Verwendung beim Lesen des Schreib-Identifikationsfeldes aufweist,
wobei das Lese-Identifikationsfeld innerhalb des Datensektors derart angeordnet ist, daß die Steuerinformation des zumindest einen Datensektors zum Lesen des Lese-Identifikationsfeldes verwendet wird.

5. Plattenlaufwerk nach Anspruch 4, bei dem jede der Steuerinformationen in dem Datensektor und in dem Schreib-Identifikationsfeld ein VFO-Signal und eine Synchronisationsmarke einschließt.

## Revendications

1. Support de disque destiné à être utilisé dans un disque dur ayant au moins un disque de stockage (22) monté de manière à pouvoir tourner, une tête (24) ayant des espaces séparés de lecture et d'écriture et un actionneur rotatif (28) pour monter la tête dans le but de lire et d'écrire des données depuis et sur le disque de stockage, ledit support de disque pour le disque de stockage comprenant :
une surface susceptible d'être magnétisée ;
une pluralité de pistes de données (50) s'étendant circonférentiellement et définies sur la surface magnétisable ;
chaque piste de données ayant une ligne médiane et comprenant au moins un secteur de données (58) ;
ledit au moins un secteur de données comprenant une zone de mémoire pour stocker des données et des informations de contrôle destinées à être utilisées lors de la lecture du secteur de données ;
chaque piste de données comprenant en outre une zone d'identification d'écriture (82, 82') contenant des informations concernant l'identification de secteur de données pour la lecture au cours d'une opération d'écriture, dudit au moins un secteur de données et d'une zone d'identification de lecture (58', 58") contenant les informations concernant l'identification de secteur de données pour la lecture au cours d'une opération de lecture dudit au moins un secteur de données ;
caractérisé en ce que
l'une ou l'autre des zones d'identification d'écriture (82, 82') est agencée dans une position alignée par rapport à la ligne médiane d'une piste de données respective et ledit secteur de données est radialement décalé de la ligne médiane, ou
la zone d'identification d'écriture (82, 82') est agencée dans une position radialement décalée de la ligne médiane d'une piste de données respective et ledit secteur de données est aligné avec la ligne médiane ; et en ce que
la zone d'identification d'écriture (82, 82') possède des informations de contrôle destinées à être utilisées lors de la lecture de la zone d'identification d'écriture ; et
la zone d'identification de lecture (58', 58") est agencée à l'intérieur de la zone de données de manière à ce que les informations de contrôle d'au moins un secteur de données soient utilisées pour lire la zone d'identification de lecture.

2. Support de disque dur selon la revendication 1, dans lequel le degré de décalage radial est fonction d'un angle oblique provoqué par le positionnement de la tête par l'actionneur rotatif.

3. Support de disque dur selon la revendication 1 ou 2, dans lequel chacune des informations de contrôle dans le secteur de données et dans la zone d'identification d'écriture comprend un signal d'oscillateur à fréquence variable et une marque de synchronisation.

4. Disque dur, comprenant :
un disque de stockage monté de manière à pouvoir tourner ;
une tête ayant des transducteurs de lecture et d'écriture séparés agencés dans des espaces de lecture et d'écriture respectifs séparés ; et
un actionneur rotatif pour monter la tète afin de lire et d'écrire des données à partir de et sur le disque de stockage ;
l'actionneur rotatif créant un angle oblique entre les espaces de lecture et d'écriture et les pistes de données ;
le disque de stockage comprenant une surface magnétisable ayant une pluralité de pistes de données s'étendant circonférentiellement sur la surface magnétisable ;
chaque piste de données comprenant au moins un secteur de données ;
ledit au moins un secteur de données comprenant une zone de données pour stocker des données et des informations de contrôle destinées à être utilisés pour la lecture du secteur de données ; caractérisé en ce que
chaque piste de données comprend en outre une zone d'identification d'écriture contenant des informations d'identification de secteur de données destinée à être lue par le transducteur de lecture de la tête lors d'une opération d'écriture dudit au moins un secteur de données et une zone d'identification de lecture contenant des informations d'identification de secteur de données destinée à lire le transducteur de lecture de la tête lors d'une opération de lecture dudit au moins un secteur de données ;
la zone d'identification d'écriture étant agencée dans la piste de données respective dans une position radialement décalée dudit au moins un secteur de données, le décalage radial étant fonction de l'angle oblique de sorte que l'espace de lecture est centré sur la zone d'identification d'écriture lorsque l'espace d'écriture est centré sur ledit au moins un secteur de données ;
la zone d'identification d'écriture ayant des informations de contrôle destinées à être utilisées lors de la lecture de la zone d'identification d'écriture ;
la zone d'identification de lecture étant agencée à l'intérieur du secteur de données de manière à ce que les informations de contrôle dudit au moins un secteur de données sont utilisées lors de la lecture de la zone d'identification de lecture.

5. Disque dur selon la revendication 4, dans lequel chacune des informations de contrôle dans le secteur de données et dans la zone d'identification d'écriture comprend un signal d'oscillateur à fréquence variable et une marque de synchronisation.
